# EUROPÄISCHE PATENTANMELDUNG

(11) **EP 1 086 856 A2**
(43) Veröffentlichungstag der Anmeldung: **28.03.2001**
(21) Anmeldenummer: 00119090.9
(22) Anmeldetag: 02.09.2000
(51) Int. Cl.: B60R 9/04

(54) **Stützfuss für eine Fahrzeugdachreling**

(30) Priorität: 22.09.1999 DE 19945295
(71) Anmelder: JAC Products Deutschland GmbH, 42285 Wuppertal (DE)
(72) Erfinder: Gross, Michael, 44809 Bochum (DE); Stertkamp, Thomas, 42289 Wuppertal (DE)

(57) **Zusammenfassung**

Beschrieben wird ein Stützfuß für eine Fahrzeugdachreling mit einem eine Gewindebohrung aufweisenden Zapfenteil (12) und mit einem Befestigungsbolzen (1), der mit einem ersten Gewindeteil in die Gewindebohrung eingreift und auf dessen zweiten Gewindeteil eine Befestigungsmutter (15) aufschraubbar ist, wobei die beiden Gewindeteile ein bezüglich der Schraubrichtung entgegengesetztes Gewinde aufweisen. Dabei ist vorgesehen, daß der Befestigungsbolzen (1) einen Bolzenkopf (2) mit dem ersten Gewindeteil und einen vom Bolzenkopf (2) durch eine Stufe (3) abgesetzten Bolzenschaft (4) mit dem zweiten Gewindeteil umfaßt und daß der Bolzenkopf (2) eine Querbohrung (5) mit zumindest einem darin eingesetzten, durch eine Feder (7) belasteten Sperrelement (6) und weiterhin zumindest einen axial durchlaufenden Kanal (8) mit einem darin lösbar gehalterten Stift (9) aufweist, wobei der an zumindest einem Sperrelement (6) anliegende und dieses in der Querbohrung (5) haltende Stift (9) nach dem Lösen der Halterung längsverschiebbar ist und eine Öffnung (10) aufweist, die nach einem Verschieben des Stifts (9) in Höhe des zumindest einem Sperrelements (6) gelangt und demselben dadurch einen Durchtritt und ein Einrasten in eine von mehreren, in der Gewindebohrung des Zapfenteils (12) vorgesehene Längsnuten (16) ermöglicht.

## Beschreibung

Die Erfindung bezieht sich auf einen Stützfuß für eine Fahrzeugdachreling der im Oberbegriff des Anspruchs 1 näher angegebenen Art.

Ein gattungsgemäßer Stützfuß ist in der EP 0 780 267 A1 gezeigt. Bei diesem bekannten Stützfuß ist ein Befestigungsbolzen mit einem ersten und einem hierzu gegenläufigen zweiten Gewindeteil vorgesehen. Zwischen den Gewindeteilen befindet sich ein Auflageteil, durch welches die Gewindeteile voneinander getrennt sind. Der Auflageteil kommt bei der Montage auf einem Stützblech zu liegen, in dem rippenartige Erhebungen eingeformt sind, die verhindern sollen, daß sich der Befestigungsbolzen beim Aufschrauben einer Gewindemutter weiter als gewünscht mitdreht. Nachteilig bei diesem bekannten Stützfuß ist die zwingend notwendige Manipulation am Fahrzeugdach, d.h. am Dachblech oder am Boden eines Dachkanals zwecks Einformung von rippenförmigen Erhebungen. Wie die Praxis zeigt, wird von den Automobilherstellern die Durchführung derartiger Manipulationen abgelehnt.

Der Erfindung liegt nun ausgehend von einem Stützfuß der eingangs genannten Art die Aufgabe zugrunde, Vorsorge dafür zu treffen, daß sich ein automatischer Ausgleich von Toleranzen zwischen dem Stützfuß und dem Fahrzeugdach oder einem darin ausgebildeten Dachkanal ohne Manipulationen am Fahrzeugdach selbst erzielen läßt.

Diese Aufgabe wird erfindungsgemäß durch die im Anspruch 1 angegebenen Maßnahmen gelöst. Zweckmäßige Weiterbildungen und vorteilhafte Ausgestaltungen der Erfindung sind in den Unteransprüchen gekennzeichnet.

Ein bevorzugtes Ausführungsbeispiel der Erfindung wird nachfolgend anhand der Zeichnungen näher erläutert, und es zeigen:
- Fig. 1: den zum Stützfuß nach Fig. 2 und 3 gehörenden Befestigungsbolzen in einer Explosivdarstellung,
- Fig. 2: den auf ein Fahrzeugdach aufgesetzten Stützfuß vor Einleitung des Befestigungsvorgangs und
- Fig. 3: den Stützfuß nach Fig. 2 in der Befestigungsanordnung auf dem Fahrzeugdach.

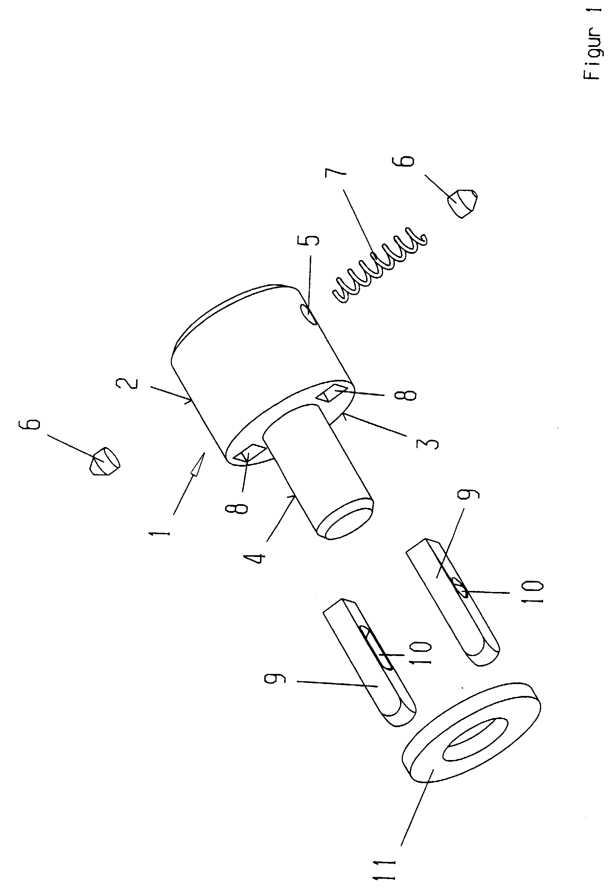

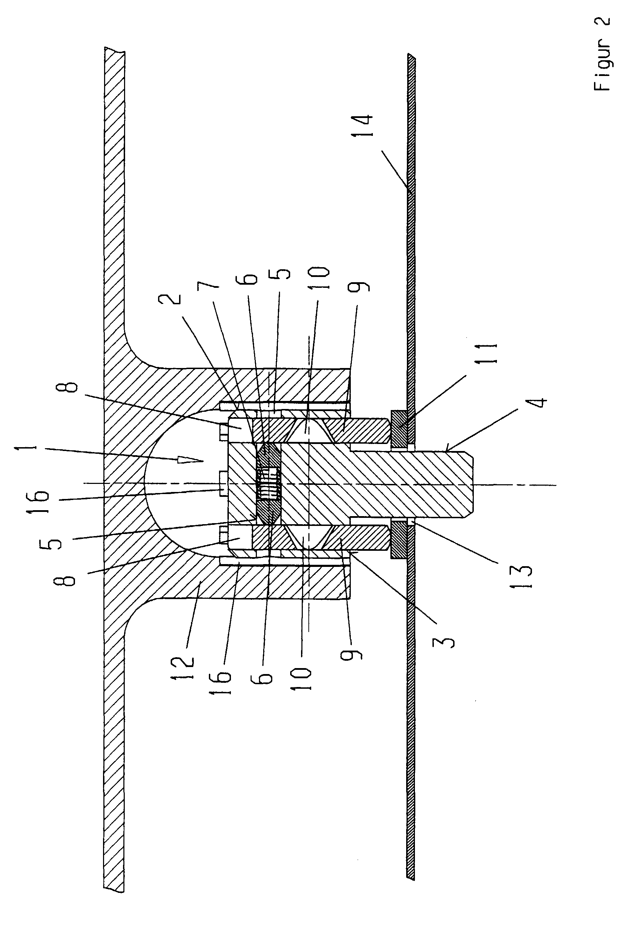

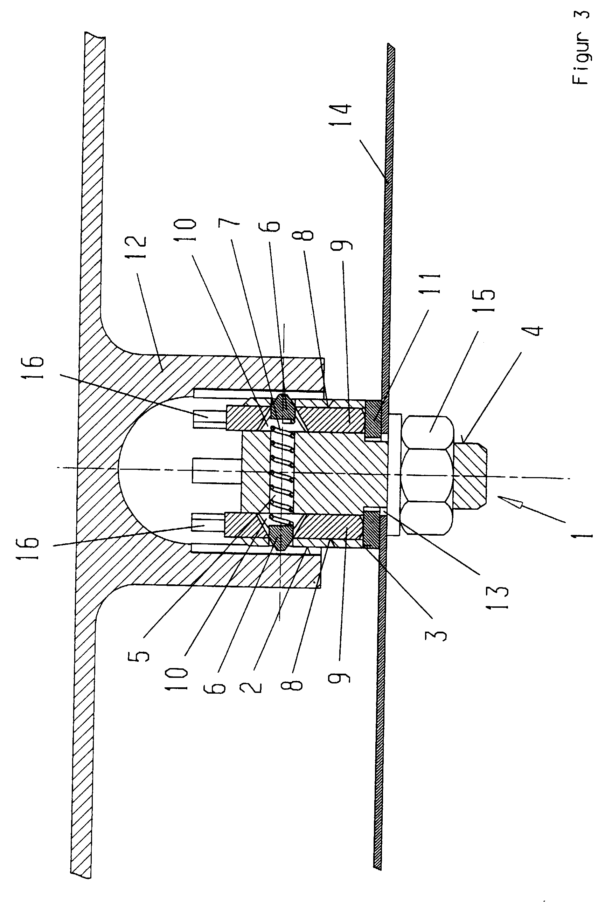

Fig. 1 zeigt den als Toleranzausgleicher ausgebildeten Befestigungsbolzen 1 für einen in Fig. 2 und 3 in vereinfachter Darstellungsmanier dargestellten Stützfuß einer nicht gezeigten Fahrzeugdachreling. Der Befestigungsbolzen 1 umfaßt einen zylindrischen Bolzenkopf 2 und einen vom Bolzenkopf 2 durch eine Stufe 3 abgesetzten zylindrischen Bolzenschaft 4, dessen Durchmesser wesentlich kleiner ist als der des Bolzenkopfs 2. Der Bolzenkopf 2 ist mit einem Linksgewinde und der Bolzenschaft 4 mit einem Rechtsgewinde versehen.

Der Bolzenkopf 2 weist eine als Durchgangsbohrung ausgebildete Querbohrung 5 auf, die zur Aufnahme von zwei Sperrelementen 6 und einer dazwischen angeordneten Feder 7, vorzugsweise einer Schraubendruckfeder dient. Weiterhin weist der Bolzenkopf 2 zwei axial durchlaufende Kanäle 8 auf, die zur Aufnahme je eines Stiftes 9 dienen. Die Kanäle 8 können, wie dargestellt geschlossen, oder aber auch randoffen und dabei ggf. hinterschnitten ausgebildet sein und weisen jeweils eine auf den Querschnitt der Stifte 9 abgestimmte, z.B. rechteckige quadratische oder auch abgerundete Querschnittsöffnung auf. Die Stifte 9 sind in den Kanälen 8 lösbar gehaltert, insbesondere durch eine Klebeverbindung. Die Stifte 9 weisen jeweils eine stark konisch gestaltete Öffnung 10 auf. Dem Befestigungsbolzen 1, der aus einem Stahlteil gefräst oder aus verschiedenen Materialien gegossen sein kann, ist auch eine Unterlegscheibe 11 zugeordnet.

Im Anlieferungszustand einer Dachreling ist der bzw. jeder Stützfuß mit einem gleichzeitig als Toleranzausgleicher dienenden Befestigungsbolzen 1 bestückt. Dabei befindet sich der Bolzenkopf 2 in einer Gewindebohrung eines Zapfenteils 12. Der Bolzenkopf 2 ist soweit in die Gewindebohrung eingeschraubt, daß die Stufe 3 und das freie Ende des Zapfenteils 12 auf etwa gleicher Höhe liegen. Die lösbar in den Kanälen 8 gehalterten Stifte 9 befinden sich in einer Position, in der sie einerseits das freie Ende des Zapfenteils 12 überragen und andererseits die Sperrelemente 6 daran hindern aus der Querbohrung 5 herauszutreten.

Fig. 2 zeigt den Anlieferungszustand und gleichzeitig den Beginn der Montage, bei der der Bolzenschaft 4 eine Öffnung 13 im Fahrzeugdach 14 durchsetzt und die Unterlegscheibe 11 auf dem Fahrzeugdach 14 aufliegt und die freien Enden der Stifte 9 abstützt. Unter Fahrzeugdach soll auch der Boden eines im Fahrzeugdach ausgebildeten Dachkanals verstanden werden.

Nach der in Fig. 2 gezeigten Anordnung kann der eigentliche Befestigungsvorgang durchgeführt werden, wobei auf den Bolzenschaft 4 eine Befestigungsmutter 15 aufgeschraubt wird. Beim Aufschrauben der Befestigungsmutter 15 wird der Bolzenkopf 2 veranlaßt, sich nach unten aus dem Linksgewinde des Zapfenteils 12 herauszudrehen. Bei diesem Vorgang wird die Halterung der Stifte 9 gelöst, indem die relativ schwache Klebeverbindung reißt. Der Bolzenkopf 2 läßt sich nun durch weitergehendes Drehen der Befestigungsmutter 15 im Anzugssinne soweit aus dem Zapfenteil 12 herausdrehen, bis die Stufe 3 auf der Unterlegscheibe 11 aufliegt. In dieser Montagestellung werden die Sperrelemente 6, die eine kegelförmige Spitze aufweisen, zufolge der Vorspannkraft der auf sie einwirkenden Feder 7 durch die Öffnungen 10 der Stifte 9 und aus der Querbohrung 5 bis zur Anlage an der Wandung der Gewindebohrung des Zapfenteils 12 herausgedrückt. Da in dieser Wandung der Gewindebohrung mehrere über den Umfang verteilte Längsnuten 16 vorgesehen sind, läßt sich der Befestigungsbolzen 1 nur noch solange mitdrehen, bis die Sperrelemente 6 in jeweils eine der Längsnuten 16 einrasten und den Bolzenkopf 2 mit dem Zapfenteil 12 verklemmen. An dieser Stelle kann dann die Schraubverbindung fest angezogen und das Fahrzeugdach 14 zwischen der Stufe 3, der Unterlegscheibe 11 und der Befestigungsmutter 15 verspannt werden.

Die Position der Öffnungen 10 in den Stiften 9 definiert den Weg, der nach der Verklemmung noch erreicht werden kann, der dann z.B. für eine Verpressung einer zwischen dem Stützfuß und dem Fahrzeugdach 14 angeordneten üblichen hier nicht gezeigten Unterlage genutzt wird.

Durch die beschriebenen Maßnahmen kann der zwischen dem Stützfuß und dem Dachblech entstehende Spalt weitgehend konstant gehalten werden. Insbesondere ist das beschriebene System montagefreundlich und unempfindlich gegen eigene und äußere Toleranzen.

## Patentansprüche

1. Stützfuß für eine Fahrzeugdachreling mit einem eine Gewindebohrung aufweisenden Zapfenteil (12) und mit einem Befestigungsbolzen (1), der mit einem ersten Gewindeteil in die Gewindebohrung eingreift und auf dessen zweiten Gewindeteil eine Befestigungsmutter (15) aufschraubbar ist, wobei die beiden Gewindeteile ein bezüglich der Schraubrichtung entgegengesetztes Gewinde aufweisen, dadurch gekennzeichnet, daß der Befestigungsbolzen (1) einen Bolzenkopf (2) mit dem ersten Gewindeteil und einen vom Bolzenkopf (2) durch eine Stufe (3) abgesetzten Bolzenschaft (4) mit dem zweiten Gewindeteil umfaßt und daß der Bolzenkopf (2) eine Querbohrung (5) mit zumindest einem darin eingesetzten, durch eine Feder (7) belasteten Sperrelement (6) und weiterhin zumindest einen axial durchlaufenden Kanal (8) mit einem darin lösbar gehalterten Stift (9) aufweist, wobei der an zumindest einem Sperrelement (6) anliegende und dieses in der Querbohrung (5) haltende Stift (9) nach dem Lösen der Halterung längsverschiebbar ist und eine Öffnung (10) aufweist, die nach einem Verschieben des Stifts (9) in Höhe des zumindest einem Sperrelements (6) gelangt und demselben dadurch einen Durchtritt und ein Einrasten in eine von mehreren, in der Gewindebohrung des Zapfenteils (12) vorgesehene Längsnuten (16) ermöglicht.

2. Stützfuß nach Anspruch 1, dadurch gekennzeichnet, daß für die lösbare Halterung des Stifts (9) in dem zumindest einen Kanal (8) eine Klebeverbindung vorgesehen ist.

3. Stützfuß nach Anspruch 1 oder 2, dadurch gekennzeichnet, daß der zumindest eine Kanal (8) einen dem rechteckigen, quadratischen oder runden Querschnitt des Stifts (9) angepaßten Öffnungsquerschnitt aufweist.

4. Stützfuß nach zumindest einem der vorangegangenen Ansprüche, dadurch gekennzeichnet, daß der zumindest eine Kanal (8) randoffen ausgebildet ist.

5. Stützfuß nach zumindest einem der vorangegangenen Ansprüche, dadurch gekennzeichnet, daß das Sperrelement (6) eine kegelförmige Spitze aufweist.

6. Stützfuß nach zumindest einem der vorangegangenen Ansprüche, dadurch gekennzeichnet, daß die über den Umfang der Gewindebohrung verteilten Längsnuten (16) in einem Winkel von 45° zueinander stehen und sich keilförmig von außen nach innen verjüngen.

7. Stützfuß nach zumindest einem der vorangegangenen Ansprüche, dadurch gekennzeichnet, daß die im Stift (9) ausgebildete Öffnung (10) keilförmig oder konisch ausgebildet ist.

8. Stützfuß nach zumindest einem der vorangegangenen Ansprüche, dadurch gekennzeichnet, daß in der Querbohrung (5) des Bolzenkopfs (2) zwei Sperrelemente (6) und eine dazwischenliegende Feder (7) angeordnet sind und daß der Bolzenkopf (2) zwei einander diametral gegenüberliegende Kanäle (8) mit jeweils einem darin lösbar gehalterten Stift (9) aufweist.
